# EUROPÄISCHE PATENTANMELDUNG

(11) **EP 2 634 596 A1**
(43) Veröffentlichungstag der Anmeldung: **04.09.2013**
(21) Anmeldenummer: 13156013.8
(22) Anmeldetag: 20.02.2013
(51) Int. Cl.: G01S 7/52

(54) **Verfahren zur Erfassung von Objekten in der Umgebung eines Kraftfahrzeugs**

(30) Priorität: 29.02.2012 DE 102012203091
(71) Anmelder: ROBERT BOSCH GMBH, 70442 Stuttgart (DE)
(72) Erfinder: Klotz, Albrecht, 71229 Leonberg (DE); Becker, Markus, 71732 Tamm (DE); Schumann, Michael, 70597 Stuttgart (DE); Fehse, Meike, 71277 Rutesheim (DE); Herder, Bjoern, 70469 Stuttgart (DE)

(57) **Zusammenfassung**

Die Erfindung betrifft ein Verfahren zur Erfassung von Objekten (9) in der Umgebung eines Kraftfahrzeugs (1) mit einem Abstandssensor (3, 5), der nach dem Puls-Echo-Verfahren arbeitet, folgende Schritte umfassend:
(c) Senden eines Signals (7) und Empfangen eines Echos (11) des von einem Objekt (9) reflektierten Signals (7),
(d) Herausfiltern von als Echo empfangenen Signalen, die schwächer sind als eine durch eine Kennlinie (37, 39, 41, 43, 45) vorgegebene Schwelle.

Die durch die Kennlinie (37, 39, 41, 43, 45) vorgegebene Schwelle wird auf einen kleineren Wert gesetzt, wenn die Anzahl der als Echo empfangenen Signale, die herausgefiltert werden, zunimmt oder die Echoamplitude abnimmt oder wird auf einen größeren Wert gesetzt, wenn die Anzahl der als Echo empfangenen Signale, die herausgefiltert werden, abnimmt oder die Echoamplitude zunimmt, oder die als Echo empfangenen Signale werden mit Kennlinien (37, 39, 41, 43, 45) mit unterschiedlichen Schwellen gefiltert und die als Echo empfangenen Signale, die mit der Kennlinie (37, 39, 41, 43, 45) gefiltert wurden, mit der noch eine eindeutige Zuordnung des empfangenen Echos zu einem Objekt (9) möglich ist, werden ausgewählt.

Die Erfindung betrifft weiterhin eine Vorrichtung zur Durchführung des Verfahrens.

## Beschreibung

### Stand der Technik

Die Erfindung geht aus von einem Verfahren zur Erfassung von Objekten in der Umgebung eines Kraftfahrzeugs mit einem Abstandssensor gemäß dem Oberbegriff des Anspruchs 1. Weiterhin betrifft die Erfindung auch eine Vorrichtung zur Durchführung des Verfahrens.

Verfahren zur Erfassung von Objekten in der Umgebung eines Kraftfahrzeugs mit einem Abstandssensor haben vielfach in Assistenzsystemen zur Unterstützung des Fahrers eines Kraftfahrzeugs Eingang gefunden. Um dem Fahrer zum Beispiel bei Einparkmanövern oder Rangiermanövern in einer engen Umgebung Unterstützung bieten zu können, ist es notwendig, die Umgebung des Kraftfahrzeuges auf Hindernisse zu erfassen. Zur Erfassung der Umgebung werden im Allgemeinen Abstandssensoren eingesetzt, die den Abstand vom Kraftfahrzeug zu Objekten in der Umgebung des Kraftfahrzeugs umfassen. Gleichzeitig wird auch die Richtung des Objektes erfasst, so dass ein Abbild der Umgebung des Kraftfahrzeugs erstellt werden kann und der Fahrer anhand dieses Abbildes beim Fahrmanöver unterstützt werden kann.

Abstandssensoren, die zur Erfassung der Umgebung des Kraftfahrzeugs genutzt werden, arbeiten zum Beispiel nach dem Puls-Echo-Verfahren. Derartige Sensoren senden ein Signal und empfangen ein reflektiertes Echo des Signals. Aus der Laufzeit vom Senden des Signals bis zum Empfangen des Echos kann bei bekannter Signalausbreitungsgeschwindigkeit, beispielsweise der Schallgeschwindigkeit bei Ultraschallsensoren, der Abstand zu dem Objekt bestimmt werden. Wenn das Objekt von zwei Sensoren erfasst wird, kann aus dem Schnittpunkt der erfassten Abstände der beiden Sensoren auch die Richtung des Objektes festgelegt werden.

Da alle schallreflektierenden Oberflächen Echos erzeugen, ist es notwendig, die Echos herauszufiltern, die nicht von als Hindernissen zu identifizierenden Objekten stammen. Solche Echos sind zum Beispiel Bodenechos. Aus DE 103 23 639 A1 ist es zum Beispiel bekannt, die Sensibilität eines Ultraschallsensors in Abhängigkeit von Bodenechos einzustellen. Dabei wird eine Anpassung der Erfassungsparameter vorgenommen, wenn stochastisch auftretende Erfassungssignale, beispielsweise von Rollsplit, detektiert werden. Die Erfassungsparameter werden dabei so geändert, dass die stochastischen Signale nicht mehr erfasst werden, um eine höhere Sicherheit zu erhalten für die Erfassung von reflektierenden Objekten.

Nachteil des aus dem Stand der Technik bekannten Verfahrens ist jedoch, dass bei einer Änderung der Erfassungsparameter derart, dass stochastische Signale nicht mehr erfasst werden auch Signale von schwach reflektierenden Objekten herausgefiltert werden und diese somit nicht mehr erkannt werden.

### Offenbarung der Erfindung

### Vorteile der Erfindung

Erfindungsgemäß wird daher ein Verfahren zur Erfassung von Objekten in der Umgebung eines Kraftfahrzeugs mit einem Abstandssensor, der nach dem Puls-Echo-Verfahren arbeitet, vorgeschlagen, das folgende Schritte umfasst:
(a) Senden eines Signals und Empfangen eines Echos des von einem Objekt reflektierten Signals,
(b) Herausfiltern von als Echo empfangenen Signalen, die schwächer sind als eine durch eine Kennlinie vorgegebene Schwelle,
wobei
- die durch die Kennlinie vorgegebene Schwelle auf einen kleineren Wert gesetzt wird, wenn die Anzahl der als Echo empfangenen Signale, die herausgefiltert werden, abnimmt oder die Echoamplitude zunimmt, oder
- die durch die Kennlinie vorgegebenen Schwelle auf einen größeren Wert gesetzt wird, wenn die Anzahl der als Echo empfangenen Signale, die herausgefiltert werden, zunimmt oder die Echoamplitude abnimmt, oder
- die als Echo empfangenen Signale mit unterschiedlichen Schwellen gefiltert werden, die jeweils durch eine Kennlinie vorgegeben sind, und die als Echo empfangenen Signale, die mit einer Schwelle gefiltert wurden, mit der noch eine eindeutige Zuordnung des empfangenen Echos zu einem Objekt (9) möglich ist, ausgewählt werden.

Die als Echo empfangenen Signale, die herausgefiltert werden, sind zum Beispiel Bodenechos. Die Zunahme oder Abnahme der Echoamplitude resultiert aus dem von einem Objekt oder Hindernis reflektierten Signal.

Das erfindungsgemäße Verfahren erlaubt es, bei einem schwach reflektierenden Untergrund die durch die Kennlinie vorgegebene Schwelle zu senken und hierdurch die Empfindlichkeit zu steigern. Hierdurch können auch schwach reflektierende Objekte detektiert werden. Weiterhin erlaubt es das erfindungsgemäße Verfahren insbesondere dann, wenn durch einen stark reflektierenden Untergrund große Störsignale auftreten, diese durch Anheben der durch die Kennlinie vorgegebene Schwelle auszublenden. Dies erlaubt eine eindeutige Zuordnung der Signale zu Objekten und keine Falschmessungen durch Messungen von Bodensignalen. Weiterhin werden durch das erfindungsgemäße Verfahren nicht nur Bodensignale ausgeblendet sondern es besteht auch die Möglichkeit, Störsignale, die sich zum Beispiel durch Messfehler ergeben, auszublenden. Durch das erfindungsgemäße Verfahren ergibt sich somit eine Verbesserung der Umfelderfassung gegenüber den aus dem Stand der Technik bekannten Systemen.

Als "schwach reflektierend" wird im Rahmen der vorliegenden Erfindung verstanden, dass das empfangene Echo eines von einem Objekt reflektierten Signals schwächer ist als ein vorgegebener Grenzwert. Entsprechend wird unter "stark reflektierend" verstanden, dass das empfangene Echo eines von einem Objekt reflektierten Signals stärker ist als der vorgegebene Grenzwert. Der zur Unterscheidung eingesetzte Grenzwert ist dabei zum Beispiel in Abhängigkeit der Empfindlichkeit eines eingesetzten Sensors frei wählbar. Eine starke Reflektion ergibt sich zum Beispiel, wenn die Oberfläche des Objektes wenig streut und eine schwache Reflektion bei einer stark streuenden Oberfläche.

Erfindungsgemäß werden zur Erfassung der Umgebung Sensoren eingesetzt, die nach dem Puls-Echo-Verfahren arbeiten. Derartige Sensoren weisen im Allgemeinen einen Sender auf, mit dem ein Signalpuls gesendet wird. Dieser wird an einem Objekt reflektiert und das so reflektierte Echo des Signales wird von einem Empfänger des Sensors empfangen. Aus der Laufzeit des Signals vom Senden des Signalpulses bis zum Empfangen des Echos kann bei bekannter Ausbreitungsgeschwindigkeit des Signals die Entfernung zu dem Objekt bestimmt werden. Übliche Sensoren, die nach dem Puls-Echo-Verfahren arbeiten sind zum Beispiel Ultraschallsensoren. In diesem Fall ist die Ausbreitungsgeschwindigkeit des Signals die Schallgeschwindigkeit in Luft. Der Sender und der Empfänger des Sensors können separate Bauteile sein oder können bauteilidentisch ausgeführt werden. Bei einer bauteilidentischen Ausführung von Sender und Empfänger sendet der Sensor zunächst den Signalpuls, schwingt aus und kann nach dem Ausschwingen eingehende Signale empfangen. Um das Ausschwingen des Sensors zu beschleunigen ist es möglich, ein Dämpfungsmaterial vorzusehen.

Insbesondere um die Reichweite bei der Messung zu erhöhen ist es bevorzugt, die Sendepulslänge zu verlängern. Ein längerer Sendepuls ermöglicht gleichzeitig ein stärkeres Signal. Somit wird auch ein von einem weiter entfernten Objekt reflektiertes Echo des Signalpulses noch mit ausreichender Stärke vom Sensor empfangen. Eine Verkürzung des Sendepulses führt gleichzeitig zu einer Verbesserung der Robustheit im Normalbetrieb bei kleinen bis mittleren Abständen, beispielsweise bei Abständen bis zu 2m, da der Bodenclutter abnimmt und das Verhältnis von Echosignal zu Cluttersignal zunimmt. Insbesondere um die Robustheit des Verfahrens zu erhöhen ist es bevorzugt, wenn die Sendepulslänge bei einer Zunahme der Anzahl der als Echo empfangenen Signale verkürzt wird. Eine Zunahme der empfangenen Echos deutet zum Beispiel auf einen unebenen Untergrund hin, so dass eine größere Anzahl an Bodenechos empfangen wird. Auch ist es möglich, dass eine Erhöhung der Anzahl an empfangenen Echos lediglich eine Mehrzahl an Störsignalen darstellt. Durch die Verkürzung der Sendepulslänge und damit der Verstärkung des Signales ist es möglich, bei Erhöhung der durch die Kennlinie vorgegebenen Schwelle weiterhin alle relevanten Objekte zu erfassen. Insbesondere werden hierdurch Signale von schwächer reflektierenden Objekten aufgrund der Erhöhung der durch die Kennlinie vorgegebenen Schwelle nicht herausgefiltert.

In einer bevorzugten Ausführungsform der Erfindung wird die Kennlinie in Abhängigkeit von der Art des Untergrunds angepasst. Hierbei wird bei einem schwach reflektierenden Untergrund die von der Kennlinie vorgegebene Schwelle auf einen kleineren Wert gesetzt und bei einem stark reflektierenden Untergrund auf einen größeren Wert. Durch das Setzen der von der Kennlinie vorgegebenen Schwelle auf einen kleineren Wert bei schwach reflektierendem Untergrund können so zum Beispiel auch schwächere Signale, beispielsweise von schwach reflektierenden Objekten oder von Objekten in größerer Entfernung, noch detektiert werden. Bei einem stark reflektierenden Untergrund stören jedoch die vom Untergrund zurückgeworfenen Signale, so dass in diesem Fall die durch den Untergrund hervorgerufenen Echos störend sind und herausgefiltert werden sollen. Aus diesem Grund wird bei einem stark reflektierenden Untergrund die von der Kennlinie vorgegebene Schwelle auf einen höheren Wert gesetzt. Durch das Setzen auf einen höheren Wert können so die vom Untergrund verursachten Signale herausgefiltert werden. Es werden nur noch die Signale empfangen, die von vom Untergrund verschiedenen Objekten erzeugt werden.

Neben dem jeweiligen Verändern der Signale in Abhängigkeit von der Anzahl der empfangenen Echos beziehungsweise in Abhängigkeit von der Art des Untergrundes ist in einer alternativen Ausführungsform vorgesehen, dass empfangene Echos mit Kennlinien, die unterschiedliche Schwellen vorgeben, gefiltert werden und zu jeder Kennlinie eine Abstandsliste aus den nicht herausgefilterten Signalen erstellt wird. Durch das Erstellen von Abstandslisten mit Kennlinien mit unterschiedlichen Schwellen gehen keine von den Sensoren empfangenen Signale verloren. Insbesondere ist es nicht notwendig, direkt beim Empfangen Signale herauszufiltern und nur die nicht herausgefilterten Signale weiter zu verarbeiten. Bei der Zuordnung in mehrere Abstandlisten, die aus den nicht herausgefilterten Signalen zu jeder Kennlinie erstellt werden, ist es möglich, direkt jeweils die geeignete Abstandsliste, die noch vernünftige Werte liefert, auszuwählen. So kann zum Beispiel bei einem nur schwach reflektierenden Untergrund die Abstandsliste gewählt werden, die für eine Kennlinie mit einer niedrigen Schwelle erzeugt wurde, wohingegen bei einem stark reflektierenden Untergrund oder bei einer großen Anzahl an Störsignalen die Abstandliste der Kennlinie ausgewählt wird, mit der eine höhere Schwelle definiert wird. Die Zuordnung in Abstandslisten zu jeder Kennlinie hat weiterhin den Vorteil, dass es nicht notwendig ist, zunächst auszuwerten ob der Untergrund stark oder schwach reflektiert oder ob eine große Anzahl an Störsignalen vorliegt, um die Schwelle, die durch die Kennlinie vorgegeben wird, entsprechend anzupassen sondern es kann direkt die jeweilige Abstandsliste, die geeignet ist, ausgewählt werden. Eine jeweilige Anpassung der Kennlinien ist nicht erforderlich.

Eine erfindungsgemäße Vorrichtung zur Durchführung des Verfahrens umfasst mindestens einen Abstandssensor, der nach dem Puls-Echo-Verfahren arbeitet, sowie ein Steuergerät, das eingerichtet ist, als Echo empfangene Signale des mindestens einen Abstandssensors, die schwächer sind als eine durch eine Kennlinie vorgegebene Schwelle, herauszufiltern und die durch die Kennlinie vorgegebene Schwelle auf einen kleineren Wert zu setzen, wenn die Anzahl der als Echo empfangenen Signale, die herausgefiltert werden, zunimmt oder die Echoamplitude abnimmt oder auf einen größeren Wert zu setzen, wenn die Anzahl der als Echo empfangenen Signale, die herausgefiltert werden, abnimmt oder die Echoamplitude zunimmt, oder das eingerichtet ist, die als Echo empfangenen Signale mit Kennlinien mit unterschiedlichen Schwellen zu filtern und die als Echo empfangenen Signale, die mit der Kennlinie gefiltert wurden, mit der noch eine eindeutige Zuordnung des empfangenen Echos zu einem Signal möglich ist, auszuwählen.

Wie vorstehend bereits beschrieben ist es insbesondere bevorzugt, wenn der Abstandssensor ein Ultraschallsensor ist. Weiterhin eignet sich das Verfahren auch für andere Sensoren, die auf Laufzeitmessungen beruhen und die eine Schwellwertauswertung auf die empfangenen Signale anwenden, beispielsweise Short-range-Radar.

Insbesondere wenn die als Echo empfangenen Signale mit Kennlinien mit unterschiedlichen Schwellen gefiltert werden und eine Zuordnung der gefilterten Werte in Abstandslisten erfolgt, ist es weiterhin vorteilhaft, wenn das Steuergerät ein Speichermedium umfasst, auf dem verschiedene Werte für die durch die Kennlinie vorgegebenen Schwellen gespeichert sind. Weiterhin sollte das Speichermedium beschreibbar sein, um die Abstandslisten ablegen zu können.

Ausführungsbeispiele der Erfindung sind in den Figuren dargestellt und werden in der nachfolgenden Beschreibung näher erläutert.

Es zeigen:
- Figur 1: eine schematische Darstellung einer Erfassung eines Objekts in Draufsicht,
- Figur 2: eine schematische Darstellung einer Objekterfassung in Seitenansicht,
- Figur 3: ein beispielhaftes Erfassungssignal eines Sensors.

### Ausführungsbeispiele der Erfindung

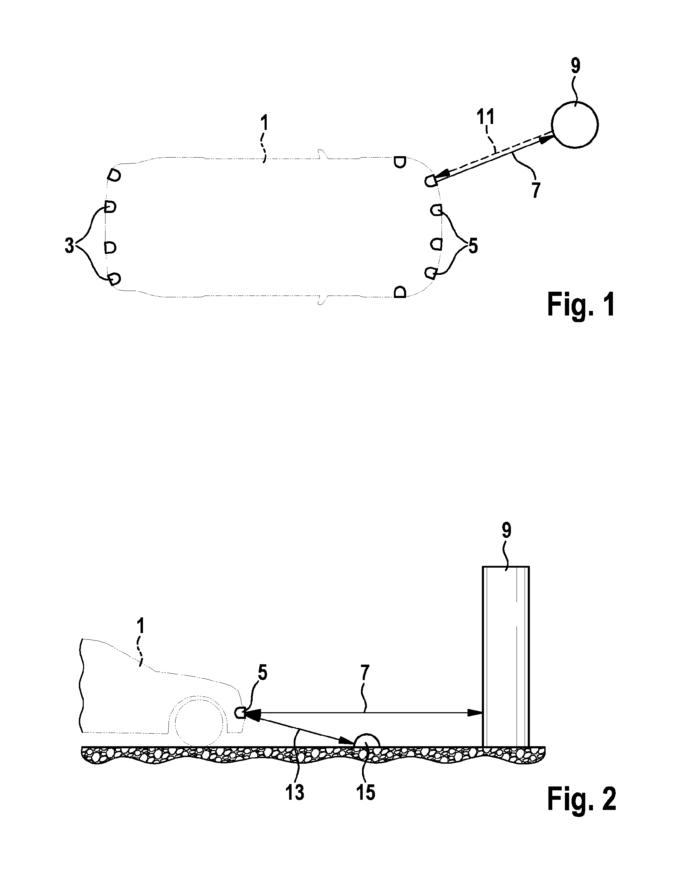

Figur 1 zeigt eine schematische Darstellung einer Erfassung eines Objekts durch ein Kraftfahrzeug in Draufsicht.

Ein Kraftfahrzeug 1 weist an seinem Heck Sensoren 3 und seiner Front Sensoren 5 auf. Mit den Hecksensoren 3 und den Frontsensoren 5 wird die Umgebung des Kraftfahrzeugs 1 erfasst. Als Sensoren, sowohl als Hecksensoren 3 als auch als Frontsensoren 5, werden erfindungsgemäß zum Beispiel Ultraschallsensoren eingesetzt. Die Erfassung der Umgebung mit den jeweiligen Sensoren 3, 5 erfolgt dabei nach dem Puls-Echo-Verfahren. Hierzu wird von einem Sensor 3, 5 ein Signal gesendet, das - sofern vorhanden - von einem Objekt 9 reflektiert wird. Ein von dem Objekt 9 reflektiertes Signal 7 wird als Echo 11 von mindestens einem der Sensoren 3, 5 empfangen. In der hier dargestellten Ausführungsform sendet einer der Frontsensoren 5 das Signal 7 und das Echo 11 wird vom selben Sensor 5 wieder empfangen. Aus der Signallaufzeit zwischen dem Senden des Signals 7 und dem Empfangen des Echos 11 lässt sich bei Einsatz von Ultraschallsensoren mittels der Schallgeschwindigkeit die Entfernung zum Objekt 9 bestimmen.

Um eindeutige Messungen zu erhalten, wird bei derzeit eingesetzten Verfahren zum Beispiel jeder der Hecksensoren 3 beziehungsweise der Frontsensoren 5 sequentiell angesteuert. Hierbei sendet zunächst ein erster Sensor ein Signal und unabhängig davon, ob ein Echo empfangen wird, wird der nächste Sensor erst angesteuert, wenn sichergestellt werden kann, dass ein gegebenenfalls empfangenes Echo auch sicher von diesem Sensor stammt. Hierdurch wird insbesondere vermieden, dass ein Echo eines vom ersten Sensor gesendeten Signals irrtümlich als ein Echo von einem des vom zweiten Sensor gesendeten Signals angesehen wird und hierdurch ein zu großer Abstand zu einem Objekt angenommen wird. Bei einem sequentiellen Betrieb ist eine Zuordnung der Signale zum sendenden Sensor insbesondere daher möglich, da die Signalstärke mit zunehmender Laufzeit abnimmt. Nachteil des sequentiellen Verfahrens ist jedoch, dass jeder Sensor erst dann erneut ein Signal sendet, wenn bereits alle anderen Sensoren ebenfalls ihre Signale gesendet haben. Der Abstand zwischen zwei Messungen ist daher vergleichsweise hoch. Dies kann, insbesondere bei höheren Geschwindigkeiten, zu einer nicht ausreichenden Überwachung der Umgebung führen. Um dies auszugleichen ist es zum Beispiel möglich, den einzelnen Sensoren 3, 5 jeweils eigene Signale zuzuordnen, so dass eine Zuordnung jeweils aufgrund der Signalart, beispielsweise der eingesetzten Frequenz erfolgen kann.

Eine schematische Darstellung einer Objekterfassung in Seitenansicht ist in Figur 2 gezeigt. Bei der Erfassung eines Objekts 9 wird zunächst ein waagerecht vom Sensor 5 gesendetes Signal 7 reflektiert und das reflektierte Echo empfangen. Signale, die mit einem Winkel abweichend von der Waagerechten gesendet werden, werden von einem Objekt 9 mit senkrechter Fläche entsprechend der Formel Einfallswinkel gleich Ausfallswinkel reflektiert, so dass das reflektierte Echo nicht vom Sensor 5 empfangen werden kann. Empfangen werden jeweils nur die Signale, die senkrecht auf das Objekt 9 auftreffen. Entsprechend ist natürlich bei einer Neigung der seitlichen Begrenzung des Objektes, die das Signal reflektiert, auch ein von der Waagerechten abweichender Signalpfad zu berücksichtigen. Üblicherweise weisen jedoch Objekte, die für das Kraftfahrzeug 1 ein Hindernis darstellen, eine senkrechte Begrenzung auf. Übliche Objekte 9, die vom Fahrzeug erfasst werden, sind zum Beispiel Hauswände oder Mauern, Blumentröge, Pfosten oder andere Kraftfahrzeuge und lediglich bei der Begrenzung durch Pflanzen können auch von der Waagerechten abweichende Flächen gemessen werden. Bei den üblichen festen Hindernissen wie Mauern oder Wänden beziehungsweise bei Kraftfahrzeugen wird im Allgemeinen das kürzeste Signal, das heißt das Signal, das vom Sensor dem waagerechten Signalpfad folgt, erfasst.

Zusätzlich zu den Signalen, die von einem Objekt 9 reflektiert und als Echo vom Sensor 5 empfangen werden, können auch Bodenechos 13 empfangen werden. Solche Bodenechos 13 treten zum Beispiel dann auf, wenn der Untergrund uneben ist. Dies ist beispielsweise dann der Fall, wenn Rollsplit auf dem Boden aufgebracht ist. Auch können Schlaglöcher oder ähnliche Unebenheiten 15 im Boden zu Signalen führen, die von einem Sensor 3, 5 empfangen werden. Solche Unebenheiten 15 sind zum Beispiel auch Bodenschwellen oder Bordsteine. Diese stellen im Allgemeinen für das Kraftfahrzeug kein Hindernis dar, so dass diese auch dem Fahrer nicht als Hindernis angezeigt werden sollen.

Insbesondere bei einem unebenen Untergrund oder einem stark reflektierenden Untergrund, wie er beispielsweise durch Rollsplit gegeben ist, bilden die reflektierten Echos schwache Signale, die durch eine entsprechende Anpassung der von einer Kennlinie vorgegebenen Schwelle, mit der Signale herausgefiltert werden, herausgefiltert werden können.

Neben den Signalen durch Bodenechos 13, beispielsweise bei einem stark reflektierenden Untergrund, können auch andere Störsignale empfangen werden, die durch eine entsprechende Anpassung der durch die Kennlinie vorgegebenen Schwelle herausgefiltert werden können. Weiterhin ist es auch möglich, insbesondere wenn nur schwache Signale empfangen werden, die durch die Kennlinie vorgegebene Schwelle zu senken, um auch von schwach reflektierenden Objekten Signale zu empfangen und zuordnen zu können. Alternativ werden statt einer Anpassung einer Kennlinie mehrere Kennlinien vorgegeben mit unterschiedlichen Schwellen, wobei zu jeder Kennlinie eine Abstandsliste erzeugt wird. Diese Abstandslisten können ausgewertet werden und vorzugsweise jeweils die Abstandsliste genutzt werden, die eine eindeutige Zuordnung zu Objekten erlaubt.

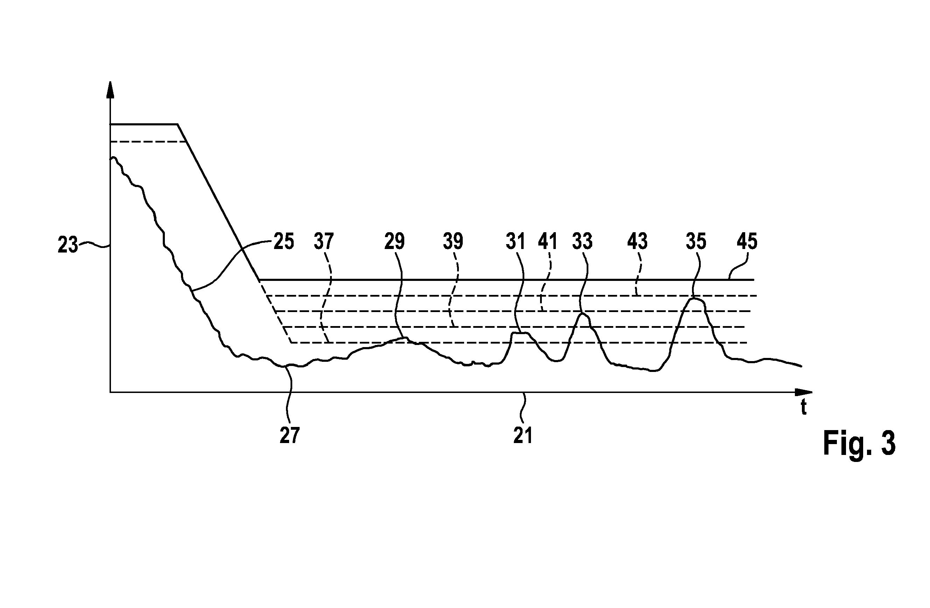

Beispielhaft ist ein Erfassungssignal eines Sensors in Figur 3 dargestellt.

Hierbei ist auf der x-Achse 21 die Zeit t und auf der y-Achse 23 das Signal dargestellt.

Bei einem Sensor, bei dem Sender und Empfänger bauteilidentisch ausgeführt sind, wird die Schwingung des Sensors nach dem Senden des Signalpulses gedämpft. Hierbei nimmt die Signalstärke von der Stärke des gesendeten Signals ab. Diese Abnahme ist mit Bezugszeichen 25 bezeichnet. Nach dem Ausschwingen wird zunächst ein Grundrauschen 27 empfangen. Aufgrund des Abstandes des Sensors vom Boden wird nach einer Mindestzeit, die dem Abstand vom Sensor zum Boden entspricht im Allgemeinen ein erstes schwaches Signal 29 empfangen, das durch eine Reflektion des Signals am Untergrund erzeugt wird. Bei einem unebenen Untergrund, beispielsweise bei Pflastersteinen oder bei einem geschotterten Untergrund kann das Signal 29 auch über einen längeren Zeitraum empfangen werden, da in regelmäßigen Abständen zum Sensor weitere Hindernisse am Untergrund vorliegen, die das Signal reflektieren. Neben dem ersten Signal 29, das durch Reflektion des gesendeten Signals am Untergrund entsteht, werden von dem Sensor weitere Signale empfangen, sofern das Signal an Objekten reflektiert worden ist. Hierbei führen Objekte mit schwacher Reflektion zu einem schwachen Signal 31, bei besserer Reflektion zu einem stärkeren Signal 33 oder auch zu einem starken Signal 35. Die Stärke des empfangenen Echosignals ist dabei zum Beispiel auch abhängig von der Oberfläche und der Richtung, in die eine Oberfläche weist. So kann zum Beispiel das gesamte Signal reflektiert werden und als Echo zum Empfänger gelangen, was zu einem sehr starken Signal führt oder es wird nur ein Teil in Richtung des Sensors zurückgestrahlt. Dies ist insbesondere dann der Fall, wenn das Signal am Objekt 9 gestreut wird.

Um insbesondere bei einer großen Anzahl an schwachen Signalen 29, 31, die zum Beispiel auf einen stark reflektierenden Untergrund hindeuten, nur Objekte zu erfassen, die für das Kraftfahrzeug 1 tatsächlich Hindernisse darstellen, wird das von Sensor 3, 5 empfangene Signal gefiltert. Hierzu werden durch Kennlinien Schwellen vorgegeben, wobei jeweils Signale herausgefiltert werden, die schwächer als die durch die jeweilige Kennlinie vorgegebene Schwelle sind.

In der hier dargestellten Ausführungsform werden zum Beispiel mit einer ersten Kennlinie 37 mit sehr niedriger Schwelle bereits die Signale, die sich durch Bodenreflektionen ergeben herausgefiltert. Signale, die etwas stärker sind, wie beispielsweise das schwache Signal 31 werden jedoch noch erfasst. Wenn die schwachen Signale 31 ebenfalls auf Störsignale hindeuten oder Reflektionen des Untergrundes und keine Objekte darstellen, können diese ebenfalls herausgefiltert werden. Hierzu wird zum Beispiel eine zweite Kennlinie 39 herangezogen, mit der die schwachen Signale herausgefiltert werden können.

In der in Figur 3 dargestellten Ausführungsform sind noch eine dritte Kennlinie 41, eine vierte Kennlinie 43 und eine fünfte Kennlinie 45 vorgesehen. Neben der hier dargestellten Anzahl von 5 Kennlinien 37, 39, 41, 43, 45 ist es jedoch auch möglich, jede beliebige andere Anzahl an Kennlinien vorzusehen. So können zum Beispiel wenn nur schwache Signale, die beispielsweise durch Bodenreflektionen entstehen, gefiltert werden sollen auch bereits zwei Kennlinien ausreichend sein. Wenn davon auszugehen ist, dass auch etwas stärkere Signale entstehen, die unerwünscht sind, können zum Beispiel auch drei Kennlinien vorgesehen sein.

Auf der anderen Seite ist es möglich, insbesondere wenn nur Signale von schwach reflektierenden Objekten erfasst werden, eine Kennlinie mit niedriger Schwelle zu nutzen, um überhaupt Signale zu empfangen.

Erfindungsgemäß ist es in einer Ausführungsvariante möglich, in Abhängigkeit von den empfangenen Signalen eine Kennlinie auszuwählen, die eine Schwelle definiert, mit der noch eine sinnvolle Objekterfassung möglich ist. Hierzu ist es zum Beispiel möglich, bei einem Empfang von einer großen Anzahl von Signalen, insbesondere von starken Signalen, die Kennlinie so zu wählen, dass durch diese eine größere Schwelle definiert wird und bei nur einer geringen Anzahl an Signalen eine Kennlinie zu wählen, die eine niedrigere Schwelle definiert. Alternativ ist es auch möglich, mehrere Abstandslisten vorzusehen, wobei jeder Abstandsliste eine Kennlinie mit einer Schwelle zugeordnet wird, wobei jeweils unterschiedliche Schwellen angenommen werden. In diesem Fall lässt sich dann die Abstandsliste auswählen, die noch eine sinnvolle Zuordnung des empfangenen Echos zu einem Objekt erlaubt. In dem Fall, dass mehrere Abstandslisten angelegt werden, besteht weiterhin auch die Möglichkeit, die einzelnen Abstandslisten unabhängig voneinander auszuwerten und beispielsweise auch mehrere Abstandslisten parallel zu nutzen. Die in den Abstandslisten aufgenommenen Werte sind dabei jeweils die Abstände zu Objekten, die durch eine eindeutige Zuordnung des empfangenen Signals bestimmt werden konnten.

## Patentansprüche

1. Verfahren zur Erfassung von Objekten (9) in der Umgebung eines Kraftfahrzeugs (1) mit einem Abstandssensor (3, 5), der nach einem Puls-Echo-Verfahren arbeitet, folgende Schritte umfassend:
(a) Senden eines Signals (7) und Empfangen eines Echos (11) des von einem Objekt (9) reflektierten Signals (7),
(b) Herausfiltern von als Echo empfangenen Signalen, die schwächer sind als eine durch eine Kennlinie (37, 39, 41, 43, 45) vorgegebene Schwelle,
**dadurch gekennzeichnet, dass**
- die durch die Kennlinie (37, 39, 41, 43, 45) vorgegebene Schwelle auf einen kleineren Wert gesetzt wird, wenn die Anzahl der als Echo empfangenen Signale, die herausgefiltert werden, abnimmt oder die Echoamplitude zunimmt, oder
- die durch die Kennlinie (37, 39, 41, 43, 45) vorgegebenen Schwelle auf einen größeren Wert gesetzt wird, wenn die Anzahl der als Echo empfangenen Signale, die herausgefiltert werden, zunimmt oder die Echoamplitude abnimmt, oder
- die als Echo empfangenen Signale mit unterschiedlichen Schwellen gefiltert werden, die jeweils durch eine Kennlinie (37, 39, 41, 43, 45) vorgegeben sind, und die als Echo empfangenen Signale, die mit einer Schwelle gefiltert wurden, mit der noch eine eindeutige Zuordnung des empfangenen Echos zu einem Objekt (9) möglich ist, ausgewählt werden.

2. Verfahren gemäß Anspruch 1, **dadurch gekennzeichnet, dass** bei einer Zunahme der Anzahl der als Echo empfangenen Signale die Sendepulslänge verkürzt wird.

3. Verfahren gemäß Anspruch 1 oder 2, **dadurch gekennzeichnet, dass** der nach dem Puls-Echo-Verfahren arbeitende Abstandssensor (3, 5) ein Ultraschallsensor ist.

4. Verfahren gemäß einem der Ansprüche 1 bis 3, **dadurch gekennzeichnet, dass** die Kennlinie (37, 39, 41, 43, 45) in Abhängigkeit von der Art des Untergrunds angepasst wird, wobei bei schwach reflektierendem Untergrund die von der Kennlinie (37, 39, 41, 43, 45) vorgegebene Schwelle auf einen kleineren Wert gesetzt wird und bei einem stark reflektierenden Untergrund die von der Kennlinie (37, 39, 41, 43, 45) vorgegebene Schwelle auf einen größeren Wert gesetzt wird.

5. Verfahren gemäß einem der Ansprüche 1 bis 3, **dadurch gekennzeichnet, dass** empfangene Echos mit Kennlinien (37, 39, 41, 43, 45), die unterschiedliche Schwellen vorgeben, gefiltert werden und zu jeder Kennlinie (37, 39, 41, 43, 45) eine Abstandsliste aus den nicht herausgefilterten Signalen erstellt wird.

6. Vorrichtung zur Durchführung des Verfahrens gemäß einem der Ansprüche 1 bis 5, umfassend mindestens einen Abstandssensor (3, 5), der nach dem Puls-Echo-Verfahren arbeitet, sowie ein Steuergerät, das eingerichtet ist, als Echo empfangene Signale des mindestens einen Abstandssensors (3, 5), die schwächer sind als eine durch eine Kennlinie (37, 39, 41, 43, 45) vorgegebene Schwelle herauszufiltern und die durch die Kennlinie (37, 39, 41, 43, 45) vorgegebene Schwelle auf einen kleineren Wert zu setzen, wenn die Anzahl der als Echo empfangenen Signale, die herausgefiltert werden, zunimmt oder die Echoamplitude abnimmt oder auf einen größeren Wert zu setzen, wenn die Anzahl der als Echo empfangenen Signale, die herausgefiltert werden, abnimmt oder die Echoamplitude zunimmt, oder das eingerichtet ist, die als Echo empfangenen Signale mit Kennlinien (37, 39, 41, 43, 45) mit unterschiedlichen Schwellen zu filtern und die als Echo empfangenen Signale, die mit der Kennlinie (37, 39, 41, 43, 45) gefiltert wurden, mit der noch eine eindeutige Zuordnung des empfangenen Echos zu einem Objekt (9) möglich ist, auszuwählen.

7. Vorrichtung gemäß Anspruch 6, **dadurch gekennzeichnet, dass** der Abstandssensor (3, 5) ein Ultraschallsensor ist.

8. Vorrichtung gemäß Anspruch 6 oder 7, **dadurch gekennzeichnet, dass** das Steuergerät ein Speichermedium umfasst, auf dem verschiedene Werte für die durch die Kennlinie vorgegebenen Schwellen gespeichert sind.
